Europäisches Patentamt

European Patent Office

Office européen des brevets

(11) Veröffentlichungsnummer: **0 063 726**
**A1**

(12) **EUROPÄISCHE PATENTANMELDUNG**

(21) Anmeldenummer: 82102974.1

(51) Int. Cl.³: **G 03 B 21/64**

(22) Anmeldetag: 07.04.82

(30) Priorität: 10.04.81 DE 3114616

(43) Veröffentlichungstag der Anmeldung: 03.11.82
Patentblatt 82/44

(84) Benannte Vertragsstaaten: **AT BE CH FR GB IT LI NL**

(71) Anmelder: **Diaspeed Diatechnik Hans-J. Philipp,
Eichenstrasse 15/17, D-8900 Augsburg 21 (DE)**

(72) Erfinder: **Philipp, Hans-Jürgen, Eichenstrasse 15/17,
D-8900 Augsburg 21 (DE)**

(74) Vertreter: **Kahler, Kurt, Dipl.-Ing., Raiffeisenstrasse 4,
D-8931 Walkertshofen (DE)**

(54) Rahmen für Diapositive.

(57) Der Rahmen besteht aus einem einzigen Teil und besitzt vorder- und rückseitig je einen rechteckigen Ausschnitt, der kleiner als die Schutzabdeckungen ist. Bei mindestens einem der Ausschnitte haben zwei sich gegenüberliegende Kanten einen Abstand, der gleich oder geringfügig größer als die Breite der Schutzabdeckungen ist. Parallel zu den beiden anderen gegenüberliegenden Kanten des Ausschnitts verläuft im Inneren des Rahmens je eine im Querschnitt annähernd U-förmige Rinne, wobei eine der beiden Rinnen tiefer als die andere ist. Im Bereich der tieferen Rinne ist eine Arretierung vorgesehen.

PATENTANWALT
**DIPL. ING. KURT KAHLER**
RAIFFEISENSTR. 4
D-8931 WALKERTSHOFEN
TEL. 08232-341

Rahmen für Diapositive

B e s c h r e i b u n g

Die Erfindung betrifft einen Rahmen für Diapositive mit den Merkmalen des Oberbegriffs des Patentanspruchs 1.

Bekannte Rahmen (vgl. z.B. DE-PS 12 84 656) bestehen im allgemeinen aus einem Rahmenoberteil und einem Rahmenunterteil, die an der Rückwand der Kante mittels eines Scharniers verbunden sind. An der gegenüberliegenden Kante befindet sich ein Verschluß, der Rahmenoberteil und Rahmenunterteil arretiert und der beispielsweise zum Säubern des Rahmens geöffnet werden kann. Die Schutzabdeckungen sind entweder auf der Innenseite des Rahmenoberteils und des Rahmenunterteils befestigt oder sie sind mit einer Maske verbunden, die zusammen mit den Schutzabdeckungen und dem Diapositiv in einen an der rückwärtigen Kante vorhandenen Klemmanschlag eingelegt werden kann.

Aus der DE-PS 23 16 10 ist ein Wechselrahmen für Diapositive bekannt, bei dem Rahmenoberteil und Rahmenunterteil aus einem Stück gefertigt und durch Verbindungsstege verbunden sind.

Sind bei den bekannten Rahmen feste Gläser vorgesehen, so besteht die Gefahr, daß sich insbesondere in den Ecken und an den Befestigungsstellen im Rahmenober- bzw. -unterteil Staub ansammelt, der sich nur mit vieler Mühe entfernen läßt. Da gerade beim Reinigen der Ecken die Richtung ständig verändert wird, können sehr leicht Schlieren auf den Schutzabdeckungen entstehen. Ein unbeabsichtigtes, mögliches Abbrechen der winzigen Halterungen erschwert das Rahmen wesentlich. Vor dem Versand müssen Ober- und Unterteil zusammenmontiert und die Gläser eingesetzt werden. Der bei den üblichen Klapprahmen notwendige Verschluß birgt die Gefahr in sich, daß der Rahmen bei automatischem Transport hängen bleibt. Auch ist es notwendig, beim Schließen der Klapprahmen die Rahmenteile zu verbiegen, wobei es zu einem Glasbruch oder einem Verrutschen des Diapositivs kommen kann. Da Rahmenober- und -unterteil unter Spannung zusammengehalten werden, kommt es bei automatischem Transport immer wieder vor, daß die Rahmen entweder am Scharnier oder am Verschluß auseinanderspringen. Diese Spannung hat auch zur Folge, daß die Schutzabdeckungen nicht planparallel das Diapositiv halten, was zu Unschärfen bei der Projektion führt. Dieser Fehler wird bei bekannten Rahmen auch dadurch verursacht, daß die Schutzabdeckungen merklich kleiner als das Diapositiv sind, so daß letzteres sowohl auf den Schutzabdeckungen als auch auf den Außenstegen der Rahmen aufliegt. Da die Schutzabdeckungen Toleranzschwankungen in der Stärke aufweisen, sind Unebenheiten im Rahmen nicht zu vermeiden.

Die Herstellungskosten von Klapprahmen, sei es daß sie aus einem oder aus zwei Teilen bestehen, sind verhältnismäßig hoch, da die Form recht kompliziert aufgebaut ist. Hinzu kommt bei zweiteiligen Rahmen die Montage des Ober- und Unterteils, sowie gegebenenfalls das Einsetzen der Gläser.

Der Erfindung liegt die Aufgabe zugrunde, einen Rahmen für Diapositive mit möglichst einfachem Aufbau zu schaffen unter Berücksichtigung der Herstellung, der Rahmung und der reibungslosen automatischen Förderung bei der Projektion.

Der erfindungsgemäße Rahmen besitzt die Merkmale des Kennzeichens des Patentanspruchs 1.

Durch die einstückige Ausbildung ergibt sich eine erhebliche Vereinfachung der Spritzform; auch fällt die Montage von Ober- und Unterteil weg. Da kein Schnappverschluß vorgesehen ist, tritt kein Verbiegen oder Verwinden der Rahmenteile mehr auf. Auch besteht nicht mehr die Gefahr, daß der Rahmen am Verschluß im Magazin hängenbleibt. Da keine Spannung vorhanden ist, bleiben die Schutzabdeckungen planparallel zueinander. Ein Aufspringen des Rahmen ist nicht möglich.

Bevorzugte Ausführungsformen des erfindungsgemäßen Rahmens sind in den Unteransprüchen gekennzeichnet.

Weitere Merkmale und Vorteile des erfindungsgemäßen Rahmens ergeben sich aus der nachfolgenden Beschreibung eines Ausführungsbeispiels anhand der Zeichnung. Es zeigen

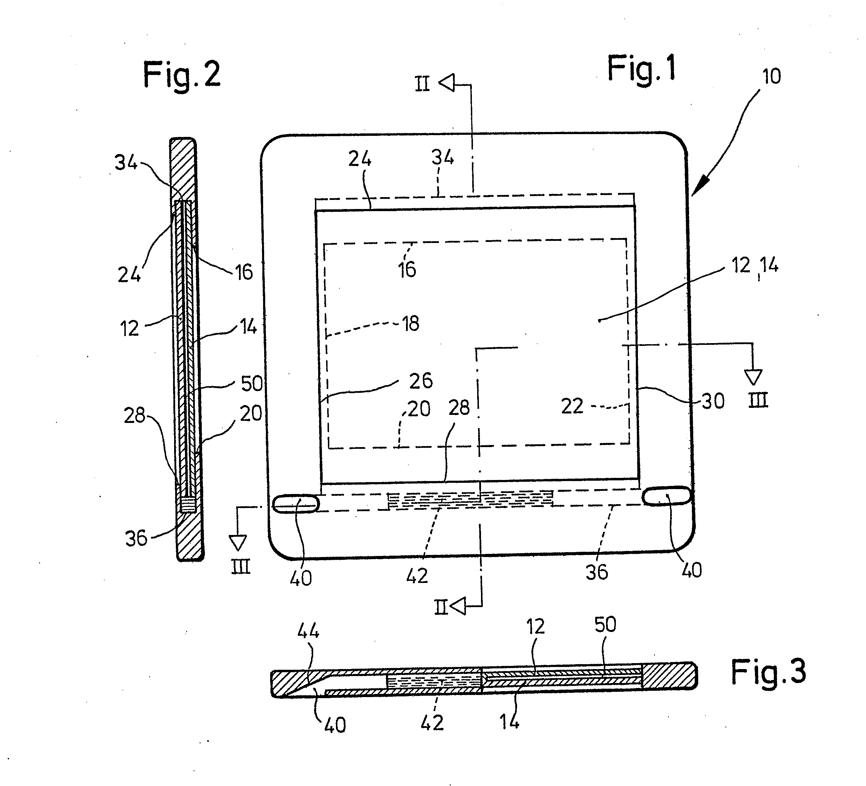

Fig. 1 eine Draufsicht auf eine bevorzugte Ausführungsform des erfindungsgemäßen Rahmens,

Fig. 2 eine Schnittansicht längs der Linie II-II der Figur 1 der bevorzugten Ausführungsform des erfindungsgemäßen Rahmens und

Fig. 3 eine Schnittansicht längs der Linie III-III in Figur 1 der bevorzugten Ausführungsform des erfindungsgemäßen Rahmens.

In den Figuren ist ein einteiliger Rahmen 10 gezeigt, an dessen Vorder- und Rückseite je ein fensterartiger Ausschnitt vorgesehen ist, der durch die Kanten 24, 26, 28 und 30 bzw. 16, 80, 20, und 22 umgrenzt wird. Die beiden Ausschnitte können gleiche Form bzw. Größe haben; vorzugsweise ist jedoch einer der Ausschnitte kleiner als der andere. Bei mindestens einem der Ausschnitte haben zwei sich gegenüberliegende parallele Kanten, nämlich 26 und 30 einen Abstand, der gleich oder geringfügig größer ist, als die Breite von Schutzabdeckungen, etwa Gläsern 12, 14 zwischen denen ein Filmstreifen oder Diapositiv 50 angeordnet werden kann.

Parallel zu den beiden anderen sich gegenüberliegenden parallelen Kanten 24, 28 verlaufen im Inneren des Rahmens je eine im Querschnitt annähernd U-förmige Rinnen 34, 36, wobei der Abstand der Böden der beiden Rinnen 34 und 36 größer ist als die Höhe der Schutzabdeckungen 12, 14. Eine der beiden Rinnen, bei der Ausführungsform die Rinne 36, ist tiefer als die andere Rinne 34. Die Höhe der Schutzabdeckungen 12, 14 ist so bemessen, daß die Schutzabdeckungen, nach dem sie in die tiefere Rinne 36 eingeschoben wurden, an der gegenüberliegenden Kante 24 vorbei in die Höhe der Rinne 34 gebracht werden können. Die Höhe der Glasabdeckungen entspricht vorzugsweise auch etwa der Höhe der Diapositive. Die Breiten der U-förmigen Rinnen 34, 36 entsprechen etwa der Stärke der beiden Schutzabdeckungen 12, 14 plus der Stärke des Diapositivs 50. Vorteilhaft ist es, die inneren Oberkanten der Schenkel der U-förmigen Rinnen anzuphasen oder die Innenflächen der Schenkel zumindest in ihren oberen Hälften nach außen verlaufend abzuschrägen. Dies trifft insbesondere für die Rinne 34 zu, während bei der Rinne 36 die Abschrägung bzw. Anphasung nur am äußersten oberen Ende der Schenkel angebracht wird, damit die Schutzabdeckungen 12, 14 nach Einsetzen eine gesicherte Lage haben.

Beim Rahmen wird zuerst das Diapositiv zwischen die zwei Schutzabdeckungen 12, 14 gelegt, wo es einfach zu positionieren ist, da es die gleiche Höhe wie die Schutzabdeckungen 12, 14 besitzt. Der nächste Schritt besteht darin, diese Packung annähernd bis zum Boden der Rinne 36 einzuschieben. In dieser Position kann die Packung dann in Ausrichtung mit der anderen Rinne 34 gebracht und in diese eingeschoben werden. In dieser Lage wird die aus den Schutzabdeckungen 12, 14 und dem Diapositiv 50 bestehende Packung fixiert und zwar in einer Weise, für die verschiedene Alternativen nachstehend angegeben werden.

Eine Möglichkeit besteht darin, daß die tiefere Rinne 36 sich zumindest nach einer Seite vorzugsweise jedoch nach beiden Seiten bis zu einer an der Rahmenoberfläche liegenden Öffnung 40 fortsetzt. Hierbei ist jede Öffnung 40 an der Vorder- bzw. Rückseite des Rahmens über eine Abschrägung 44 mit der Rinne 36 verbunden. Andererseits könnte die Rinne 36 sich auch gradlinig bis zur Oberfläche der Schmalseiten des Rahmens fortsetzen.

Bei eingelegten und an den Boden der Rinne 34 anstoßenden Schutzabdeckungen wird nun über die Öffnung, z.B. 40, eine Arretierung eingeführt, die beispielsweise aus einer Schnur oder Draht, etwa aus Kunststoff oder Metall besteht*) Der Querschnitt kann rund oder eckig sein und ist den Öffnungen 40 bzw. der Rinne 36 angepaßt. Die Länge der Schnur 42 ist derart bemessen, daß nach dem Einführen kein Ende übersteht. Beim Rahmen können die Schnurstücke 42 von einer Schnurrolle abgeschnitten werden, wobei der jeweilige Anfang der Schnurrolle zum tieferen Einführen des Schnurstücks 42 verwendet wird. Andererseits läßt sich das Schnurstück 42 auch sehr einfach dadurch wieder entfernen, daß man ein ähnliches Schnurstück nachschiebt.

Da sich das Schnurstück 42 vollkommen innerhalb des Rahmens befindet, gibt es keinerlei Überstehen der Kanten oder Teile, die zu einem Hängenbleiben des Rahmens beim automatischen Transport führen können. Durch die spannungsfreie Fixierung der Schutzabdeckungen und des Diapositivs treten auch keinerlei Aufbauchungen auf, die sonst zu Stockungen beim automatischen Transport Anlaß geben könnten.

*) und auch rohrförmig ausgeführt sein kann.

Neben dieser bevorzugten Ausführungsform der Arretierung stehen noch verschiedene andere Möglichkeiten zur Verfügung. So wäre es möglich im Bereiche der Rinne 36 senkrecht dazu verlaufende Bohrungen vorzusehen, in die ein dazu passender gegebenenfalls mit einem flachen Kopf versehener Stift gegebenenfalls druckknopfartig eindrückbar ist.

Bei einer vereinfachten Ausführungsform des Rahmens könnte die Rinne 36 ganz wegfallen. In diesem Falle wird der Abstand der Kante 28 zum Boden der Rinne 34 derart bemessen, daß er der Höhe der Schutzabdeckungen 12, 14 entspricht. Beim Rahmen würde dann die aus den Schutzabdeckungen 12, 14 und dem Diapositiv 50 bestehende Packung bis an den Boden der Rinne 34 eingeführt, während die gegenüberliegende Kante der Packung an der Kante 28 anliegt. In diesem Falle könnte die Arretierung durch an der Kante 28 bzw. an den Kanten 26 und 30 in der Nähe der Kante 28 angeordnete Vorsprünge, Lippen oder dergleichen erfolgen, hinter die die Packung gedrückt wird. Alternativ käme auch die bereits erwähnte druckknopfartige Arretierung mit über die Kante 28 überstehendem Flachkopf in Frage, wobei dieser Kopf im Rahmen versenkt sein kann. Eine weitere Alternative der Arretierung wäre eine Art Riegel, der vorzugsweise in dem durch die Kante 28 begrenzten Rahmenteil schwenkbar oder verschiebbar angebracht ist.

Für die Verwendung der Diarahmen 10 in Karussellmagazinen kann es vorteilhaft sein, den Rahmen nach zumindest einer Seite hin, vorzugsweise jedoch allseitig abzuschrägen.

DIPL.-ING. KURT KAHLER
PATENTANWALT

8931 WALKERTSHOFEN NR. 15
TEL. 08239-341

0063726

P 1102 EUR

Anmelder: Diaspeed Diatechnik
Hans Philipp
Eichenstr. 15/17
D-8900 Augsburg 21

Rahmen für Diapositive

Patentansprüche

1. Rahmen für Diapositive, bei dem das Diapositiv zwischen zwei im Rahmen nicht befestigten, durchsichtigen oder durchscheinenden verhältnismäßig steifen Schutzabdeckungen angeordnet ist und der Rahmen vorder- und rückseitig je einen rechteckigen Ausschnitt besitzt, der kleiner als die Schutzabdeckungen ist und Mittel zur Positionierung der Schutzabdeckungen vorgesehen sind, dadurch g e k e n n z e i c h n e t, daß der Rahmen (10) aus einem einzigen Teil besteht, daß bei mindestens einem der Ausschnitte zwei sich gegenüberliegende parallele Kanten (26,30) einen Abstand haben, der gleich oder geringfügig größer wie die Breite der Schutzabdeckungen (12,14) ist, daß zu den beiden anderen gegenüberliegenden Kanten (24,28) des Ausschnitts je eine im Querschnitt annähernd U-förmige Rinne (34,36) parallel im Inneren des Rahmens verläuft, wobei der Abstand der Böden der beiden Rinnen (34,36) größer ist, als die Höhe der Schutzabdeckungen (12,14), wobei eine der beiden Rinnen (z.B. 36) tiefer als die andere (34) ist, und daß im Bereich der tieferen Rinne (36) eine Arretierung (42) vorgesehen ist, die die Schutzabdeckungen (12,14) mit ihren oberen und unteren Kanten innerhalb der Rinne (34,36) hält.

2. Rahmen nach Anspruch 1, dadurch g e k e n n z e i c h n e t, daß einer der Ausschnitte (16,18,20,22) kleiner ist, als der andere Ausschnitt (24,26,28,30).

3. Rahmen nach Anspruch 1 oder 2, dadurch g e k e n n z e i c h n e t, daß die tiefere Rinne (36) sich zumindest nach einer Seite vorzugsweise nach beiden Seiten bis zu (je) einer an der Rahmenoberfläche liegenden Öffnung (40) fortsetzt.

4. Rahmen nach Anspruch 3, dadurch g e k e n n z e i c h n e t, daß die Öffnung(en) (40) an der Vorder- bzw. Rückseite des Rahmens angeordnet ist bzw. sind und über eine Abschrägung (44) mit der tieferen Rinne (36) verbunden ist bzw. sind.

5. Rahmen nach einem der Ansprüche 1 bis 4, dadurch g e k e n n z e i c h n e t, daß die Arretierung aus einer Auffüllung des Freiraums in der tieferen Rinne (36) besteht.

6. Rahmen nach einem der Ansprüche 3 bis 5, dadurch g e k e n n z e i c h n e t, daß die Arretierung aus einem schnur- oder drahtartigen Teil aus Kunststoff oder Metall besteht, dessen Länge so bemessen ist, daß es im eingeführten Zustand im wesentlichen nicht über die Öffnungen (40) vorsteht.

7. Rahmen nach Anspurch 1 oder 2, dadurch g e k e n n - z e i c h n e t, daß nur eine Rinne (34) vorgesehen ist, daß der Boden dieser Rinne (34) von der gegenüberliegenden Kante (28) des Ausschnitts einen Abstand besitzt , der gleich der Höhe der Schutzabdeckungen (12,14) ist.

8. Rahmen nach einem der vorhergehenden Ansprüche, dadurch g e k e n n z e i c h n e t, daß die Arretierung aus mindestens einer senkrecht zur tieferen Rinne (36) durch diese verlaufenden Bohrung mit einem dazu passenden gegebenenfalls mit einem flachen Kopf versehenen Stift besteht, der gegebenenfalls druckknopfartig eindrückbar ist.

9. Verfahren zur Rahmung von Diapositiven unter Verwendung eines Rahmens nach einem der Ansprüche 1 bis 8, g e k e n n z e i c h n e t durch folgende Schritte:

   a) Bilden einer ausgerichteten Packung aus den Schutzabdeckungen (12,14) mit dazwischenliegendem Diapositiv (50),

   b) Einführen einer Kante der Packung in eine der Rinnen (34 bzw. 36),

   c) Ausrichten der gegenüberliegenden Kante der Packung mit der anderen Rinne bzw. der der einen Rinne gegenüberliegenden Kante,

   d) Arretieren der Packung in dieser Position.

10. Verfahren nach Anspruch 9, dadurch g e k e n n - z e i c h n e t, daß die Packung (12,14,50) in die tiefere Rinne (36) eingeführt und nach Ausrichtung der anderen Rinne in diese eingeschoben sowie in dieser Position durch Auffüllen des Freiraums in der tieferen Rinne (34) arretiert wird.

0063726

Fig.1

Fig.2

Fig.3

## EUROPÄISCHER RECHERCHENBERICHT

**Europäisches Patentamt**

0063726

Nummer der Anmeldung

EP 82 10 2974

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A- 924 743 (H.S. LIBER)<br><br>* Seite 2, Zeilen 3-63; Figuren 1-3 *<br><br>--- | 1,2,7, 10 | G 03 B 21/64 |
| A | US-A-3 069 795 (A.L. LIEBERMAN)<br>* Spalte 2; Spalte 3, Zeilen 1-18; Figuren 1-7 *<br><br>--- | 1,2 | |
| A | FR-A-1 102 106 (J. LENGLET)<br>* Seite 1; Figuren 1-4 *<br><br>--- | 1 | |
| A | FR-A- 882 902<br>(SCHALLBAND-SYNDIKAT AG)<br>* Seite 1, Zeilen 38-58; Seite 2, Zeilen 1-24; Figuren 1-3 *<br><br>----- | 1 | |

RECHERCHIERTE SACHGEBIETE (Int. Cl. 3)

G 03 B 21/64

Der vorliegende Recherchenbericht wurde für alle Patentansprüche erstellt.

| Recherchenort | Abschlußdatum der Recherche | Prüfer |
|---|---|---|
| DEN HAAG | 23-07-1982 | BOEYKENS J.W. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82